# FASCICULE DE BREVET EUROPEEN

(11) **EP 3 390 202 B1**
(45) Date de publication et mention de la délivrance du brevet: **04.12.2019**
(21) Numéro de dépôt: 16825479.5
(22) Date de dépôt: 12.12.2016
(51) Int. Cl.: B62D 3/12

(54) **DISPOSITIF DE CONTRÔLE DE DIRECTION POUR UN VÉHICULE AUTOMOBILE**
LENKUNGSSTEUERUNGSVORRICHTUNG FÜR EIN KRAFTFAHRZEUG
STEERING CONTROL DEVICE FOR A MOTOR VEHICLE

(30) Priorité: 17.12.2015 FR 1562586
(43) Date de publication de la demande: 24.10.2018
(73) Titulaire: RENAULT s.a.s., 92100 Boulogne-Billancourt (FR)
(72) Inventeur: OLLIVIER, Mathieu, 75014 Paris (FR)
(86) Numéro de dépôt international: PCT/FR2016/053335
(87) Numéro de publication internationale: WO 2017/103407

(56) Documents cités:
- EP-A1- 2 039 588
- DE-A1- 10 254 111
- DE-A1-102010 048 341

## Description

### DOMAINE TECHNIQUE DE L'INVENTION

L'invention concerne un dispositif de contrôle de direction pour un véhicule automobile.

L'invention concerne plus particulièrement un dispositif de contrôle de direction pour un véhicule automobile destiné à transmettre aux roues directrices du véhicule, agencées longitudinalement à l'avant, un changement de direction commandé par un conducteur du véhicule par l'intermédiaire d'un volant, ledit dispositif de contrôle comportant au moins une colonne de direction reliée au volant et un mécanisme de direction comportant au moins un pignon de transmission qui engrène avec une crémaillère solidaire d'une tige de direction pour provoquer un déplacement transversal de ladite tige, vers la gauche ou vers la droite, selon le changement de direction.

### ARRIERE PLAN TECHNIQUE DE L'INVENTION

On connaît de l'état de la technique des dispositifs de contrôle de direction de ce type qui sont utilisés pour conduire notamment un véhicule automobile.

Dans un tel dispositif de contrôle de direction, la colonne de direction est connectée à un mécanisme de direction associé.

La colonne de direction est généralement reliée par une liaison mécanique au mécanisme de direction du dispositif de contrôle.

Toutefois, on connaît également des dispositifs de contrôle de direction appelés « *steering by wire* » dans lesquels la colonne de direction est indépendante mécaniquement du mécanisme de direction et reliée par une liaison de type électrique.

Le mécanisme de direction comporte au moins un pignon de transmission et une crémaillère de direction qui comportent respectivement un engrenage à contact externe de manière que les roues directrices du véhicule tournent du même côté que le volant.

Le pignon solidaire en rotation de l'extrémité inférieure de la colonne de direction est agencé longitudinalement à l'avant de la tige de direction comportant la crémaillère, c'est-à-dire longitudinalement du côté du moteur.

L'orientation longitudinale correspond ainsi par convention à celle du déplacement du véhicule en ligne droite, respectivement de l'arrière vers l'avant en marche avant et l'avant vers l'arrière en marche arrière.

Le pignon coopère par engrènement avec la crémaillère qui s'étend transversalement sur la tige, longitudinalement à l'avant de la tige et en arrière par rapport audit pignon.

Dans un véhicule automobile, une telle conception de mécanisme de direction détermine la disposition relative des organes du groupe motopropulseur dans le compartiment moteur, généralement situé longitudinalement à l'avant du véhicule.

Le mécanisme de direction du dispositif de contrôle de direction et tout particulièrement la crémaillère de direction ont ainsi une incidence sur la position relative du groupe motopropulseur, notamment celle du moteur, et ce faisant sur la compacité de l'ensemble.

Le but de l'invention est notamment de proposer des solutions pour améliorer la compacité dans un compartiment moteur d'un véhicule automobile et offrir une plus grande liberté d'agencement entre le mécanisme de direction du dispositif de contrôle de direction et des organes du groupe motopropulseur tels que le moteur.

### BREF RESUME DE L'INVENTION

Dans ce but, l'invention propose un dispositif de contrôle de direction selon la revendication 1.

Avantageusement, un tel agencement du pignon par rapport à la tige de direction permet d'obtenir une plus grande compacité par rapport à l'état de la technique.

La tige de direction comporte une crémaillère agencée longitudinalement en arrière avec laquelle engrène le pignon également agencé longitudinalement en arrière de la tige de direction du mécanisme.

L'invention permet pour chaque application d'optimiser l'agencement relatif de la crémaillère de direction et du pignon par rapport au moteur, notamment à l'arbre de transmission du moteur d'orientation transversale.

Avantageusement, le mécanisme de direction du dispositif de contrôle de direction selon l'invention permet par exemple de reculer longitudinalement vers l'arrière le moteur ou encore de loger un groupe motopropulseur présentant un encombrement longitudinal plus important.

Avantageusement et par comparaison aux possibilités offertes avec un mécanisme de direction selon l'état de la technique, le mécanisme de direction du dispositif de contrôle de direction selon l'invention permet selon les applications de déplacer longitudinalement ledit mécanisme, par exemple d'avancer longitudinalement vers l'avant la tige de direction.

Grâce à un tel agencement de la crémaillère de direction et du pignon de transmission du mécanisme de direction, les roues directrices du véhicule sont également susceptibles d'être avancées longitudinalement vers l'avant par rapport à l'arbre de transmission et le moteur. DE 102 54 111 divulgue le préambule de la revendication 1.

Le dispositif de contrôle de direction comporte des moyens d'inversion de manière que le changement de direction transmis aux roues directrices, vers la gauche ou vers la droite, corresponde respectivement au sens de rotation du volant.

Selon d'autres caractéristiques de l'invention :
- ledit dispositif comporte des moyens d'inversion du sens de rotation de la colonne de direction par rapport au sens de rotation du volant ;
- les moyens d'inversion sont constitués par des moyens mécaniques à engrenages ;
- lesdits moyens d'inversion comportent au moins une première roue dentée et une deuxième roue ;
- ladite première roue comporte une première denture externe qui engrène avec une deuxième denture externe de la deuxième roue ;
- la première roue présente un premier axe de rotation et la deuxième roue un deuxième axe de rotation qui s'étendent longitudinalement ;
- le premier axe de rotation de la première roue est décalé au moins verticalement par rapport au deuxième axe de rotation de la deuxième roue ;
- le premier axe de rotation de la première roue est agencé verticalement au-dessus du deuxième axe de rotation de la deuxième roue pour obtenir une position haute du volant ou en-dessous du deuxième axe de rotation de la deuxième roue pour obtenir une position basse du volant ;
- le premier axe de rotation de la première roue est décalé au moins transversalement par rapport au deuxième axe de rotation de la deuxième roue ;
- le premier axe de rotation de la première roue est décalé au moins transversalement à droite par rapport au deuxième axe de rotation de la deuxième roue ou à gauche par rapport au deuxième axe de rotation de la deuxième roue pour décaler transversalement à droite ou à gauche la position du volant.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :

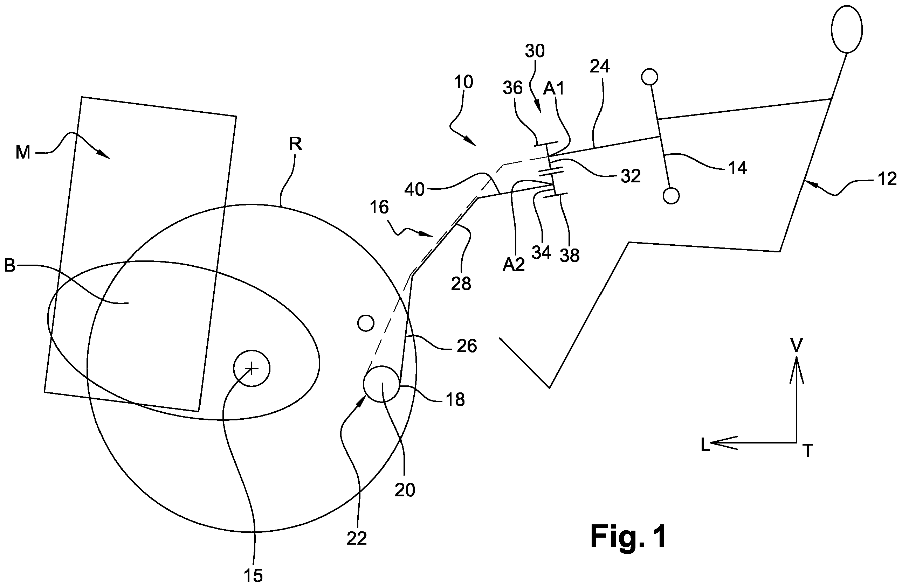

- la figure 1 est une vue schématique de côté qui représente un exemple de réalisation d'un dispositif de contrôle de direction comportant une colonne de direction et un mécanisme de direction selon l'invention et qui, par rapport à l'état de la technique représenté en pointillé, illustre notamment la possibilité de reculer longitudinalement vers l'arrière le moteur ou encore de loger un groupe motopropulseur présentant un encombrement longitudinal plus important ;

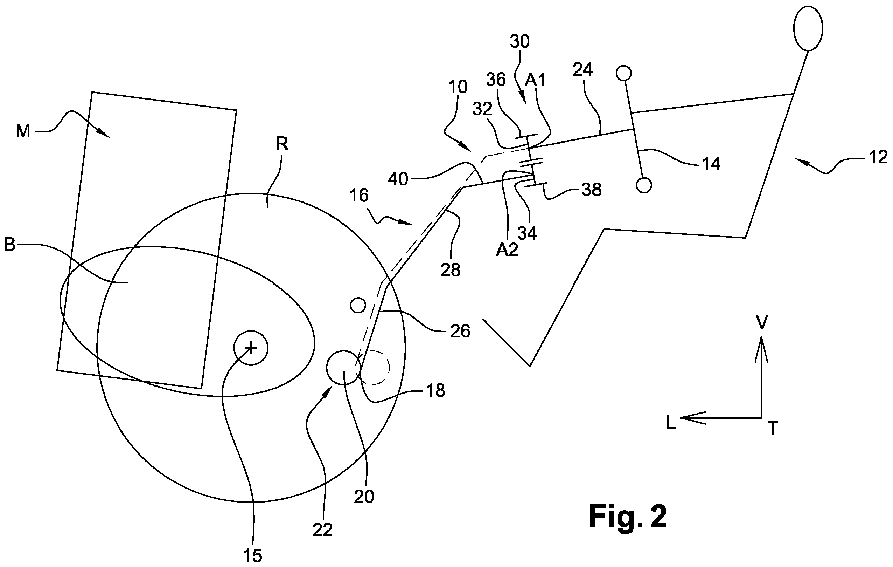

- la figure 2 est une vue schématique analogue à la figure 1 qui représente un exemple de réalisation d'un mécanisme de direction du dispositif de contrôle selon l'invention et qui illustre la possibilité d'avancer longitudinalement vers l'avant la tige de direction par rapport à l'état de la technique représenté en pointillé grâce à quoi les roues directrices du véhicule sont également susceptibles d'être avancées longitudinalement vers l'avant, notamment par rapport au moteur ;

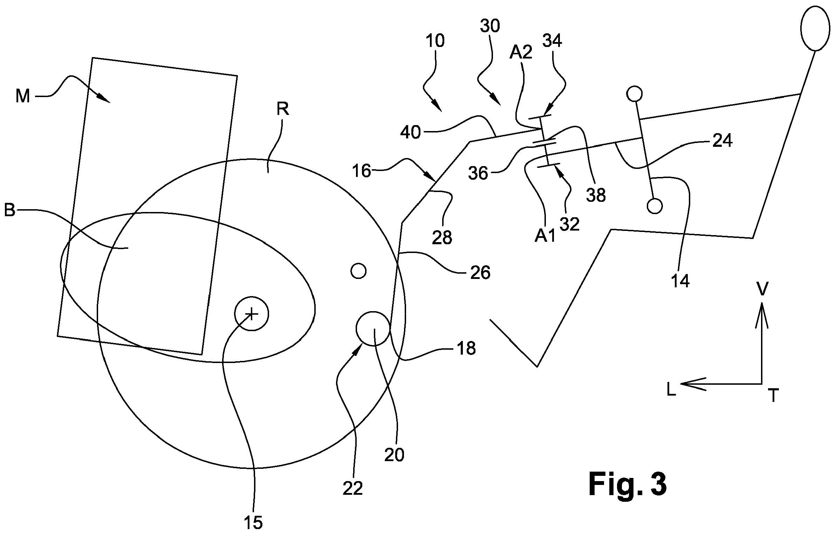

- la figure 3 est une vue schématique analogue aux figures 1 et 2 qui représente un exemple de réalisation d'un mécanisme de direction du dispositif de contrôle selon l'invention et qui illustre par comparaison avec lesdites figures 1 et 2 la possibilité de modifier au moins verticalement la position du volant en fonction de l'agencement des roues dentées formant les moyens d'inversion du sens de rotation de la colonne de direction par rapport au sens de rotation du volant.

### DESCRIPTION DETAILLEE DES FIGURES

Dans la suite de la description, on adoptera à titre non limitatif des orientations longitudinale, verticale et transversale indiquées par le trièdre (L, V, T) sur les figures.

Par convention et de manière non limitative, on utilisera dans la description qui suit les termes « avant » et « arrière » en référence à l'orientation longitudinale, « gauche » et « droite » en référence à l'orientation transversale et les termes « supérieur » et « inférieur » ou encore « haut » et « bas » en référence à l'orientation verticale.

Dans la suite de la description, des éléments présentant une structure identique ou des fonctions analogues seront désignés par les mêmes références.

On a représenté sur la figure 1, un exemple de réalisation d'un dispositif de contrôle de direction comportant notamment au moins un mécanisme 10 de direction pour un véhicule automobile.

Sur la figure 1, on a représenté schématiquement une partie des organes du groupe motopropulseur du véhicule comportant ledit mécanisme 10 du dispositif de contrôle de direction et un conducteur 12.

Le groupe motopropulseur comporte notamment un moteur M à combustion interne associé à une boîte B de vitesses et un arbre 15 de transmission.

L'arbre 15 de transmission s'étend transversalement, entre des roues R directrices du véhicule, respectivement situées longitudinalement à l'avant du véhicule selon le trièdre (L, V, T) représenté sur la figure 1.

Le dispositif de contrôle de direction est destiné à transmettre aux roues R directrices du véhicule, agencées longitudinalement à l'avant, un changement de direction commandé par le conducteur 12 du véhicule par l'intermédiaire d'un volant 14.

Outre le mécanisme 10 de direction, le dispositif de contrôle comporte pour ce faire au moins une colonne 16 de direction.

Dans l'exemple de réalisation du dispositif de contrôle de direction représenté sur la figure 1, la colonne 16 de direction et le mécanisme 10 de direction dudit dispositif de contrôle sont reliés mécaniquement l'un à l'autre.

Tel que représenté sur la figure 1, la colonne 16 de direction comporte une extrémité qui est reliée au volant 14 et une autre extrémité qui est reliée au mécanisme 10 de direction.

Le mécanisme 10 de direction comporte au moins un pignon 18 de transmission qui engrène avec une crémaillère 20.

La crémaillère 20 est solidaire d'une tige 22 de direction.

De préférence, la crémaillère 20 est insérée dans un carter (non représenté) lubrifié qui est ici monté perpendiculairement à la colonne 16 de direction.

Le pignon 18 de transmission du mécanisme 10 de direction est solidaire de ladite autre extrémité de la colonne 16 de direction, soit celle opposée au volant 14 qui est relié à l'autre extrémité.

Dans l'exemple de réalisation du dispositif de contrôle de direction représenté sur la figure 1, l'entraînement en rotation du pignon 18 ainsi relié au volant 14 par la colonne 16 de direction provoque un déplacement transversal de ladite tige 22, vers la gauche ou vers la droite, selon le changement de direction souhaité.

En variante non représentée, le pignon 18 de transmission du mécanisme 10 de direction n'est pas relié mécaniquement à la colonne 16 de direction.

Tel sera notamment le cas lorsque le dispositif de contrôle de direction étant du type « steering by wire », la colonne 16 de direction et le mécanisme 10 de direction sont connectés l'un à l'autre par une liaison de type électrique.

Une rotation du volant 14 dans le sens horaire provoque un braquage des roues directrices de la gauche vers la droite tandis qu'une rotation du volant 14 dans le sens antihoraire provoque inversement un braquage des roues directrices de la droite vers la gauche.

La tige 22 de direction du mécanisme 10 de direction est reliée à chacune des roues R directrices avant du véhicule par au moins une biellette d'accouplement (non représentée).

Dans l'exemple de réalisation représenté sur la figure 1, la colonne 16 de direction du mécanisme 10 comporte au moins trois parties, un arbre 24 supérieur qui est relié à un arbre 26 inférieur par un tube 28 de direction.

Le tube 28 de direction est interposé entre ledit arbre 24 supérieur et ledit arbre 26 inférieur comportant le pignon 18 de transmission du mécanisme 10 de direction.

Les parties de la colonne 16 de direction, ici respectivement référencées 24, 26 et 28, sont par exemple entrecoupées par des moyens d'articulation (non représentés), tels que des joints de cardan ou télescopiques.

La colonne 16 de direction présente avantageusement une conception permettant de garantir la sécurité du conducteur, notamment en cas de collision frontale.

Les moyens de fixation (tels que des rivets en plastique) intervenant entre lesdites parties 24, 26 et 28 de la colonne 16 de direction pour les fixer sont par exemple aptes à se rompre par cisaillement afin d'éviter qu'un choc venant de la partie inférieure ne soit transmis à la partie supérieure reliée au volant 14.

De préférence, le pignon 18 et la crémaillère 20 du mécanisme 10 de direction comporte respectivement une denture de type hélicoïdale.

Avantageusement, la denture de la crémaillère 20 présente un pas variable, c'est-à-dire comporte une denture ayant un module et un angle de pression qui ne sont pas identiques au centre et aux extrémités transversales de la crémaillère 20.

Ainsi, lorsque la crémaillère est dans la zone centrale (ce qui correspond à un déplacement en ligne droite du véhicule), la transmission du mouvement est rapide, la conduite directe.

Avec un mécanisme 10 de direction de ce type (à denture variable), l'effort au volant diminue avec le braquage ce qui permet avantageusement pour certaines applications de ne pas monter sur le dispositif de contrôle de direction du véhicule de système d'assistance.

Conformément à l'invention, le pignon 18 et la crémaillère 20 du mécanisme 10 de direction sont agencés longitudinalement en arrière de la tige 22 de direction.

Avantageusement, une telle disposition du pignon 18 par rapport à la tige 22 de direction permet de libérer l'espace situé, selon le trièdre (L, V, T), longitudinalement en avant de la tige 22 de direction.

La tige 22 de direction peut alors être positionnée longitudinalement au plus près, sans interférence, des organes adjacents du groupe motopropulseur tels que le moteur M, la boîte B de vitesses et l'arbre 15 de transmission.

Cela ouvre de nouvelles possibilités d'agencement par rapport au mécanisme 10 de direction du dispositif de contrôle, notamment du moteur M qui sont susceptibles de permettre une amélioration de la compacité (par comparaison avec ce qui serait obtenu avec un mécanisme de direction selon l'état de la technique).

Sur les figures 1 et 2, l'arbre 15 de transmission du groupe motopropulseur d'orientation transversale selon le trièdre (L, V, T) est susceptible d'être pris comme élément de référence pour illustrer les avantages apportés par l'invention.

L'invention permet notamment pour chaque application d'optimiser la compacité en choisissant la disposition de la crémaillère 20 de direction et du pignon 18 du mécanisme 10 de direction par rapport au moteur, notamment par rapport à l'arbre 15 de transmission d'orientation transversale illustré sur les figures 1 et 2.

Avantageusement, l'invention permet selon un exemple illustré sur la figure 1 de reculer longitudinalement vers l'arrière le moteur M ou encore de loger un groupe motopropulseur présentant un encombrement longitudinal plus important.

Pour l'illustrer on a représenté en pointillé sur la figure 1 un mécanisme de direction selon l'état de la technique afin de permettre la comparaison avec un mécanisme 10 de direction selon l'invention dont le pignon 18 est agencé longitudinalement en arrière de la tige 22 de direction comportant la crémaillère 20.

Avantageusement et par rapport aux possibilités offertes avec un mécanisme de direction selon l'état de la technique, l'invention permet selon un autre exemple illustré sur la figure 2 d'avancer longitudinalement vers l'avant la tige 22 de direction comportant la crémaillère 20.

Grâce à une telle disposition avancée, les roues directrices du véhicule sont alors susceptibles d'être avancées longitudinalement vers l'avant par rapport à l'arbre 15 de transmission du groupe motopropulseur.

Pour l'illustrer on a également représenté en pointillé sur la figure 2 un mécanisme de direction selon l'état de la technique afin de permettre la comparaison avec un mécanisme 10 de direction selon l'invention.

Par comparaison avec un agencement selon l'état de la technique dans lequel le pignon 18 est disposé longitudinalement en avant de la tige 22 de direction et de la crémaillère 20, l'agencement selon l'invention a pour conséquence d'inverser le sens de rotation des roues directrices par rapport au sens de rotation du volant 14.

Avantageusement, le dispositif de contrôle de direction comporte des moyens d'inversion de manière que le changement de direction transmis aux roues directrices, vers la gauche ou vers la droite, corresponde au sens de rotation du volant, respectivement vers la gauche (sens antihoraire) ou vers la droite (sens horaire).

Dans l'exemple de réalisation représenté sur les figures, le dispositif de contrôle comporte des moyens 30 d'inversion du sens de rotation de la colonne 16 de direction par rapport au sens de rotation du volant 14.

Grâce aux moyens 30 d'inversion, le changement de direction transmis aux roues par le dispositif de contrôle est ainsi de même sens que celui de la rotation du volant 14 manœuvré par le conducteur 12 du véhicule.

De préférence et tel qu'illustré dans l'exemple de réalisation des figures 1 et 2, les moyens 30 d'inversion sont agencés dans une partie supérieure de la colonne 16 de direction reliée au volant 14.

Avantageusement, les moyens 30 d'inversion sont toutefois susceptibles d'être agencés différemment dans le dispositif de contrôle et plus précisément sont reliés à la colonne 16 de direction d'une part, et au mécanisme 10 de direction, d'autre part.

Dans l'exemple de réalisation, ladite partie supérieure de la colonne 16 de direction est formée par l'arbre 24 supérieur, de sorte que les moyens 30 d'inversion sont agencés à proximité du volant 14.

Les moyens 30 d'inversion sont par exemple compris entre le tube 28 de direction de la colonne 16 de direction et le volant 14.

En variante non représentée, les moyens 30 d'inversion sont agencés dans une partie inférieure de la colonne 16 de direction telle que l'arbre 26 inférieur dans l'exemple de réalisation représenté sur les figures 1 et 2.

De préférence, les moyens 30 d'inversion sont constitués dans l'exemple de réalisation par des moyens mécaniques tels que des moyens à engrenages.

Les moyens 30 d'inversion à engrenages comportent au moins une roue dentée et une autre roue dentée.

Les moyens 30 d'inversion à engrenages comportent au moins une roue dentée reliée à la colonne 16 de direction et une autre roue dentée reliée au mécanisme 10 de direction.

Tel que représenté notamment sur la figure 1, les moyens 30 d'inversion à engrenages comportent au moins une première roue 32 dentée reliée à la colonne 16 de direction et une deuxième roue 34 dentée reliée au mécanisme 10 de direction.

La première roue 32 comporte une première denture 36 externe qui engrène avec une deuxième denture 38 externe de la deuxième roue 34.

Dans l'exemple de réalisation, la première roue 32 est liée en rotation au volant 14 par l'arbre 24 supérieur tandis que la deuxième roue 34 est liée en rotation à un arbre 40 intermédiaire qui est relié au mécanisme 10 par la colonne 16 de direction, ici au tube 28.

De tels moyens 30 d'inversion formés par des moyens mécaniques à engrenages sont avantageusement aptes à permettre une déformation de la colonne 16 de direction pour garantir la sécurité du conducteur 12, en particulier en cas de collision frontale du véhicule.

Avantageusement, les moyens 30 d'inversion permettent de modifier la position du volant 14 selon les orientations verticale et/ou transversale en fonction de l'agencement de la première roue 32 par rapport à la deuxième roue 34.

Avantageusement, le mécanisme 10 de direction du dispositif de contrôle est susceptible d'être standardisé, par exemple avec une deuxième roue 34 comme élément de référence, tout en ayant la possibilité de modifier en fonction de l'agencement de la première roue 32 la position verticale et/ou transversale du volant 14 selon les applications et plus particulièrement le type de véhicule.

Grâce à la liberté de positionnement du volant 14 obtenue avec les moyens 30 d'inversion, on obtient une réduction de la diversité pour les différentes applications ce qui permet avantageusement de réduire les coûts d'études.

Dans l'exemple de réalisation, la première roue 32 présente un premier axe A1 de rotation et la deuxième roue 34 présente un deuxième axe A2 de rotation qui s'étendent selon l'orientation longitudinale.

Selon une première possibilité, le premier axe A1 de rotation de la première roue 32 est décalé au moins verticalement par rapport au deuxième axe A2 de rotation de la deuxième roue 34.

Tel que représenté sur les figures 1 et 2, la première roue 32 est positionnée au-dessus de la deuxième roue 34, le premier axe A1 de rotation de la première roue 32 étant décalé vers le haut selon l'orientation verticale du trièdre (L, V, T) par rapport au deuxième axe A2 de rotation de la deuxième roue 34.

La première roue 32 est par exemple superposée à la deuxième roue 34 de sorte lesdites première roue 32 et deuxième roue 34 présentent des axes A1 et A2 de rotation qui sont compris dans un même plan vertical d'orientation longitudinale.

En variante non représentée, lesdites première roue 32 et deuxième roue 34 sont décalées transversalement de manière à ne pas se superposer, toutefois le premier axe A1 peut alors rester situé verticalement au-dessus du deuxième axe A2.

Selon cette variante, le premier axe A1 est alors compris dans un plan vertical d'orientation longitudinale qui est parallèle à un autre plan vertical d'orientation longitudinale contenant le deuxième axe A2, lesdits plans étant séparés transversalement entre eux d'une distance déterminée.

Tel qu'illustré sur les figures 1 et 2, une telle disposition desdites roues 32 et 34 formant les moyens 30 d'inversion permet avantageusement d'obtenir une position haute du volant 14 relativement au conducteur 12.

La position haute du volant 14 est par exemple recherchée dans certains types de véhicule comme les « S.U.V » acronyme pour « *Sport Utility Vehicle* » en langue anglaise.

De préférence, le deuxième axe A2 de la deuxième roue 34 relié à l'arbre 40 intermédiaire constitue une référence fixe par rapport à laquelle on détermine ensuite l'agencement de la première roue 32 et donc du premier axe A1.

Avantageusement, l'agencement de la première roue 32 par rapport à la deuxième roue 34 est déterminé en fonction de la position souhaitée du volant 14 qui peut notamment varier verticalement et/ou transversalement selon la position relative du premier axe A1 par rapport au deuxième axe A2.

Tel que représenté sur la figure 3 et par comparaison avec les figures 1 et 2, le premier axe A1 de rotation de la première roue 32 est décalé verticalement vers le bas par rapport au deuxième axe A2 de rotation de la deuxième roue 34.

Comme on peut le voir sur la figure 3, la première roue 32 est alors agencée verticalement en-dessous de la deuxième roue 34 de manière à obtenir une position basse du volant 14 relativement au conducteur 12.

Une telle position basse du volant 14 est par exemple recherchée pour des véhicules de type « berline » par comparaison aux véhicules « S.U.V » précités et à une position haute du volant 14.

En variante non représentée, la première roue 32 présente un premier axe A1 de rotation qui est décalé selon l'orientation transversale par rapport au deuxième axe A2 de rotation de la deuxième roue 34.

Si l'exemple de réalisation représenté sur les figures 1 à 3 permet notamment de faire varier verticalement la position du volant 14, une telle variante de réalisation avec des axes A1 et A2 décalés transversalement permet de faire varier la position du volant 14 vers la gauche ou vers la droite.

Le premier axe A1 de rotation de la première roue 32 est décalé transversalement à droite par rapport au deuxième axe A2 de rotation de la deuxième roue 34 ou à gauche par rapport au deuxième axe A2 de rotation de la deuxième roue 34 pour obtenir une position du volant 14 décalée transversalement qui soit respectivement rapproche ou éloigne le conducteur 12 du centre du véhicule et ce faisant du passager assis à côté.

Avantageusement, la disposition des moyens 30 d'inversion représentée sur les figures 1 à 3 permet une bonne gestion de la rétractation de la colonne 16 de direction lors de chocs tels qu'une collision frontale et facilite également la mise au point du réglage en profondeur du volant 14.

Avantageusement, la coopération des dentures externes 36 et 38 desdites première roue 32 et deuxième roue 34 permet de régler la profondeur du volant 14 sans avoir recours à des cannelures comme dans les mécanismes 16 de direction selon l'état de la technique.

Avantageusement, l'utilisation de moyens 30 d'inversion formés par des moyens mécaniques à engrenages entre le volant 14 et la colonne 16 de direction permet de modifier la démultiplication généralement mise en œuvre afin de faciliter les changements de direction pour le conducteur 12.

Le modification de la démultiplication est par exemple obtenue par le changement des diamètres d'engrenage, notamment de la première roue 32 et/ou de la deuxième roue 34 et sans nécessairement modifier pour autant la crémaillère 20 du mécanisme 10 de direction.

Grâce à la démultiplication ainsi obtenue mécaniquement, il est notamment possible de réduire les puissances des moteurs d'un système d'assistance équipant le mécanisme 10 de direction.

En effet, le couple vu au volant 14 peut être avantageusement réduit par les moyens 30 d'inversion formés par des moyens mécaniques à engrenages.

De manière connue, le mécanisme 10 de direction du dispositif de contrôle peut comporter un système d'assistance (non représenté) apte à amplifier sélectivement un effort de changement de direction appliqué par le conducteur 12 sur le volant 14 du mécanisme 10 de direction du véhicule.

Le système d'assistance est par exemple un système d'assistance de type hydraulique, électro-hydraulique ou électrique apte à démultiplier la force de rotation de la colonne 16 de direction afin de limiter d'autant l'effort du conducteur 12 pour la manœuvre du volant 14.

Avantageusement, l'effet d'assistance est dégressif en fonction de la vitesse du véhicule.

Bien entendu l'exemple de réalisation du dispositif de contrôle qui vient d'être décrit en référence aux figures 1 à 3 n'est nullement limitatif.

Selon un autre exemple de réalisation non représenté, l'invention trouve également à s'appliquer à un dispositif de contrôle de direction du type « steering by wire » dans lequel la colonne 16 de direction est découplée du mécanisme 10 de direction.

Par comparaison avec l'exemple de réalisation décrit précédemment, la colonne 16 de direction et le mécanisme 10 de direction d'un tel dispositif de contrôle de direction du type « steering by wire » ne sont en effet pas reliés mécaniquement mais électriquement.

Dans le mécanisme 10 de direction de ce dispositif de contrôle de type « steering by wire », le pignon 18 de transmission et la crémaillère 20 sont agencés longitudinalement en arrière de la tige 22 de direction conformément aux enseignements de l'invention.

De préférence, ledit dispositif de contrôle ne comporte pas de moyens d'inversion tels que les moyens mécaniques à engrenages décrits précédemment.

Avantageusement dans un tel dispositif de contrôle, on obtient électriquement (par exemple en modifiant un signal) l'équivalent des moyens 30 d'inversion de manière que comme précédemment le changement de direction transmis aux roues (R) directrices, vers la gauche ou vers la droite, corresponde bien au sens de rotation du volant 14, respectivement vers la gauche (sens antihoraire) ou vers la droite (sens horaire).

## Revendications

1. Dispositif de contrôle de direction pour un véhicule automobile destiné à transmettre aux roues (R) directrices du véhicule, agencées longitudinalement à l'avant, un changement de direction commandé par un conducteur (12) du véhicule par l'intermédiaire d'un volant (14), ledit dispositif de contrôle comportant au moins une colonne (16) de direction reliée au volant (14) et un mécanisme (10) de direction comportant au moins un pignon (18) de transmission qui engrène avec une crémaillère (20) solidaire d'une tige (22) de direction pour provoquer un déplacement transversal de ladite tige (22), vers la gauche ou vers la droite, selon le changement de direction,
le pignon (18) et la crémaillère (20) étant agencés longitudinalement en arrière de la tige (22) de direction, **caractérisé en ce que** ledit dispositif comporte des moyens (30) d'inversion du sens de rotation de la colonne (16) de direction par rapport au sens de rotation du volant (14) qui sont constitués par des moyens mécaniques à engrenages comportant au moins une première roue (32) dentée et une deuxième roue (34) dentée, la première roue (32) présentant un premier axe (A1) de rotation et la deuxième roue (34) un deuxième axe (A2) de rotation qui s'étendent longitudinalement, le premier axe (A1) de rotation de la première roue (32) étant décalé au moins verticalement par rapport au deuxième axe (A2) de rotation de la deuxième roue (34) et **en ce que** le premier axe (A1) de rotation de la première roue (32) est agencé verticalement au-dessus du deuxième axe (A2) de rotation de la deuxième roue (34) pour obtenir une position haute du volant (14) ou en-dessous du deuxième axe (A2) de rotation de la deuxième roue (34) pour obtenir une position basse du volant (14).

2. Dispositif selon la revendication 1, **caractérisé en ce que** ladite première roue (32) comporte une première denture (36) externe qui engrène avec une deuxième denture (38) externe de la deuxième roue (34).

3. Dispositif selon l'une des revendications 1 ou 2, **caractérisé en ce que** le premier axe (A1) de rotation de la première roue (32) est décalé au moins transversalement par rapport au deuxième axe (A2) de rotation de la deuxième roue (34).

4. Dispositif selon la revendication 3, **caractérisé en ce que** le premier axe (A1) de rotation de la première roue (32) est décalé au moins transversalement à droite par rapport au deuxième axe (A2) de rotation de la deuxième roue (34) ou à gauche par rapport au deuxième axe (A2) de rotation de la deuxième roue (34) pour décaler transversalement à droite ou à gauche la position du volant (14).

## Patentansprüche

1. Lenkungssteuerungsvorrichtung für ein Kraftfahrzeug, welche dazu bestimmt ist, auf die gelenkten Räder (R) des Fahrzeugs, die in Längsrichtung vorn angeordnet sind, eine Richtungsänderung zu übertragen, die von einem Fahrer (12) des Fahrzeugs über ein Lenkrad (14) gesteuert wird, wobei die Steuerungsvorrichtung wenigstens eine Lenksäule (16) umfasst, die mit dem Lenkrad (14) verbunden ist, und einen Lenkmechanismus (10), der wenigstens ein Übertragungsritzel (18) umfasst, welches mit einer Zahnstange (20) kämmt, die mit einer Lenkstange (22) fest verbunden ist, um eine Querverschiebung dieser Stange (22) nach links oder nach rechts, je nach der Richtungsänderung, hervorzurufen, wobei das Ritzel (18) und die Zahnstange (20) in Längsrichtung hinter der Lenkstange (22) angeordnet sind,
**dadurch gekennzeichnet, dass** die Vorrichtung Mittel (30) zur Umkehrung der Drehrichtung der Lenksäule (16) in Bezug auf die Drehrichtung des Lenkrades (14) umfasst, welche aus Getriebemitteln bestehen, die wenigstens ein erstes Zahnrad (32) und ein zweites Zahnrad (34) umfassen, wobei das erste Rad (32) eine erste Drehachse (A1) und das zweite Rad (34) eine zweite Drehachse (A2) aufweist, welche sich in Längsrichtung erstrecken, wobei die erste Drehachse (A1) des ersten Rades (32) wenigstens vertikal in Bezug auf die zweite Drehachse (A2) des zweiten Rades (34) versetzt ist, und dadurch, dass die erste Drehachse (A1) des ersten Rades (32) vertikal oberhalb der zweiten Drehachse (A2) des zweiten Rades (34) angeordnet ist, um eine hohe Position des Lenkrades (14) zu erhalten, oder unterhalb der zweiten Drehachse (A2) des zweiten Rades (34), um eine niedrige Position des Lenkrades (14) zu erhalten.

2. Vorrichtung nach Anspruch 1, **dadurch gekennzeichnet, dass** das erste Rad (32) eine erste äußere Verzahnung (36) umfasst, welche mit einer zweiten äußeren Verzahnung (38) des zweiten Rades (34) kämmt.

3. Vorrichtung nach einem der Ansprüche 1 oder 2, **dadurch gekennzeichnet, dass** die erste Drehachse (A1) des ersten Rades (32) wenigstens in Querrichtung in Bezug auf die zweite Drehachse (A2) des zweiten Rades (34) versetzt ist.

4. Vorrichtung nach Anspruch 3, **dadurch gekennzeichnet, dass** die erste Drehachse (A1) des ersten Rades (32) wenigstens in Querrichtung nach rechts in Bezug auf die zweite Drehachse (A2) des zweiten Rades (34) oder nach links in Bezug auf die zweite Drehachse (A2) des zweiten Rades (34) versetzt ist, um die Position des Lenkrades (14) in Querrichtung nach rechts oder nach links zu verschieben.

## Claims

1. Steering control device for a motor vehicle that is designed to transmit a change of direction to the steered wheels (R) of the vehicle, which are arranged longitudinally to the front, said change of direction being commanded by a driver (12) of the vehicle by means of a steering wheel (14), said control device having at least one steering column (16) that is linked to the steering wheel (14) and a steering mechanism (10) that has at least one transmission pinion (18) that meshes with a rack (20) that is rigidly connected to a steering rod (22) to cause a transverse movement of said rod (22) to the left or to the right, depending on the change of direction, the pinion (18) and the rack (20) being arranged longitudinally behind the steering rod (22), **characterized in that** said device includes means (30) for inverting the direction of rotation of the steering column (16) in relation to the direction of rotation of the steering wheel (14), which means are mechanical gear means including at least one first gear wheel (32) and one second gear wheel (34), the first gear wheel (32) having a first axis of rotation (A1) and the second gear wheel (34) having a second axis of rotation (A2) that extend longitudinally, the first axis of rotation (A1) of the first gear wheel (32) being offset at least vertically in relation to the second axis of rotation (A2) of the second gear wheel (34) and **in that** the first axis of rotation (A1) of the first gear wheel (32) is arranged vertically above the second axis of rotation (A2) of the second gear wheel (34) to obtain a high position of the steering wheel (14) or below the second axis of rotation (A2) of the second gear wheel (34) to obtain a low position of the steering wheel (14).

2. Device according to Claim 1, **characterized in that** said first gear wheel (32) has a first external toothing (36) that meshes with a second external toothing (38) of the second gear wheel (34) .

3. Device according to either of Claims 1 and 2, **characterized in that** the first axis of rotation (A1) of the first gear wheel (32) is offset at least transversely in relation to the second axis of rotation (A2) of the second gear wheel (34).

4. Device according to Claim 3, **characterized in that** the first axis of rotation (A1) of the first gear wheel (32) is offset at least transversely to the right of the second axis of rotation (A2) of the second gear wheel (34) or to the left of the second axis of rotation (A2) of the second gear wheel (34) to transversely offset the position of the steering wheel (14) to the right or to the left.
